# EUROPEAN PATENT APPLICATION

(11) **EP 2 886 179 A1**
(43) Date of publication of application: **24.06.2015**
(21) Application number: 13198282.9
(22) Date of filing: 19.12.2013
(51) Int. Cl.: B01D 29/01, B01D 29/82, B01D 29/94

(54) **Method and equipment for preprocessing organic matter**

(71) Applicant: Biometa Finland Oy, 90620 Oulu (FI)
(72) Inventor: Lehtonen, Arto, 90620 Oulu (FI); Ruusunen, Mika, 90620 Oulu (FI)
(74) Representative: Kolster Oy Ab

(57) **Abstract**

The invention relates to a method and equipment for preprocessing organic matter. In a fractionator, organic matter is pressed against a filter (F) comprised by the fractionator in order to separate liquid from the organic matter and to produce residual matter having a higher total solids content, and subsequently the residual matter is moved by a motion transverse to the pressing motion from a surface of the filter (F) towards an outlet (DOUT) of the fractionator (D).

## Description

### Background of the invention

The invention relates to preprocessing organic matter, such as liquid manure, particularly to fractionating organic matter such that liquid is removed in order to produce residual matter having a higher total solids content. The residual matter, in turn, may proceed to be processed in a thermal pressure hydrolysis reactor, for instance.

In known methods and equipment, a way to fractionate is liquid removal based on a spinning motion, i.e. based on a centrifugal force, a kind of centrifugation, that is. When necessary, such fractionation based on a centrifugal force is enhanced by evaporation of liquid. In addition, fractionation based on reverse osmosis is known. Pressure filter devices are also known. However, the known solutions do not provide the optimal solution as far as the operation, costs or versatility of the devices is concerned.

### Brief description of the invention

An object of the invention is thus to provide a method and equipment implementing the method so as to enable the aforementioned problems to be solved. The object of the invention is achieved by a method and equipment which are characterized by what is stated in the independent claims. Preferred embodiments of the invention are disclosed in the dependent claims.

An advantage of the method and equipment according to the invention is efficient preprocessing of organic matter, which enables the organic matter to be in a form appropriate for possible further phases, such as thermal pressure hydrolysis and for a possible subsequent further phase, such as biogas production. As to the implementation of fractionation, the equipment according to the invention is reliable and versatile.

### Brief description of the figures

The invention is now described in closer detail in connection with the preferred embodiments and with reference to the accompanying drawings, in which:
Figures 1 a and 1 b show a fractionator;
Figure 2 shows a hydrolysis reactor and a preceding fractionator;
Figure 3 shows the equipment according to Figure 1 as viewed from an oblique direction;
Figure 4 is a line drawing showing a hydrolysis reactor with its peripheral structures;
Figure 5 shows the equipment according to Figure 4 as viewed from an oblique direction;
Figure 6 shows a cross section of the hydrolysis reactor;
Figure 7 is a line drawing showing a fractionator; and
Figure 8 shows the fractionator as viewed from an oblique direction.

### Detailed description of the invention

As their basic version, the equipment and method may be considered to relate to fractionation of organic matter, such as liquid manure, but, when viewed more broadly, post-fractionation thermal pressure hydrolysis and possibly also pressure disintegration after said thermal pressure hydrolysis may also be involved.

Hereinafter, the subject will be discussed with reference to slurry, but the invention and its embodiments are to be considered more broadly, i.e. as processing of organic matter, slurry thus being only one example of organic matter. Similarly, residual slurry is to be considered as an example only of residual matter.

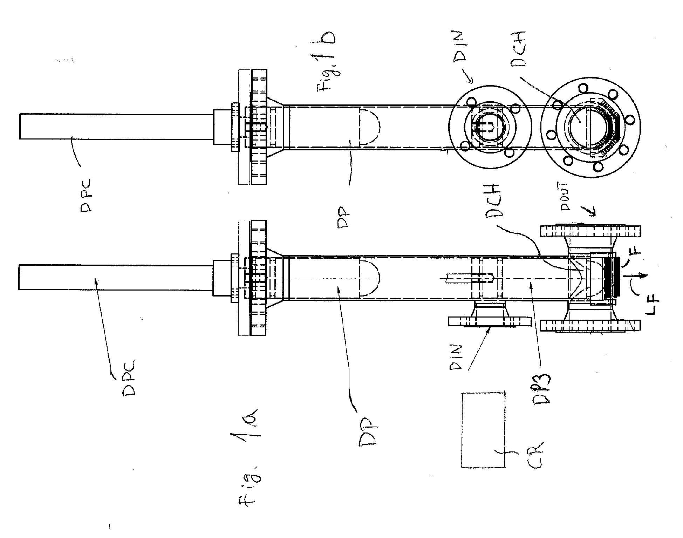

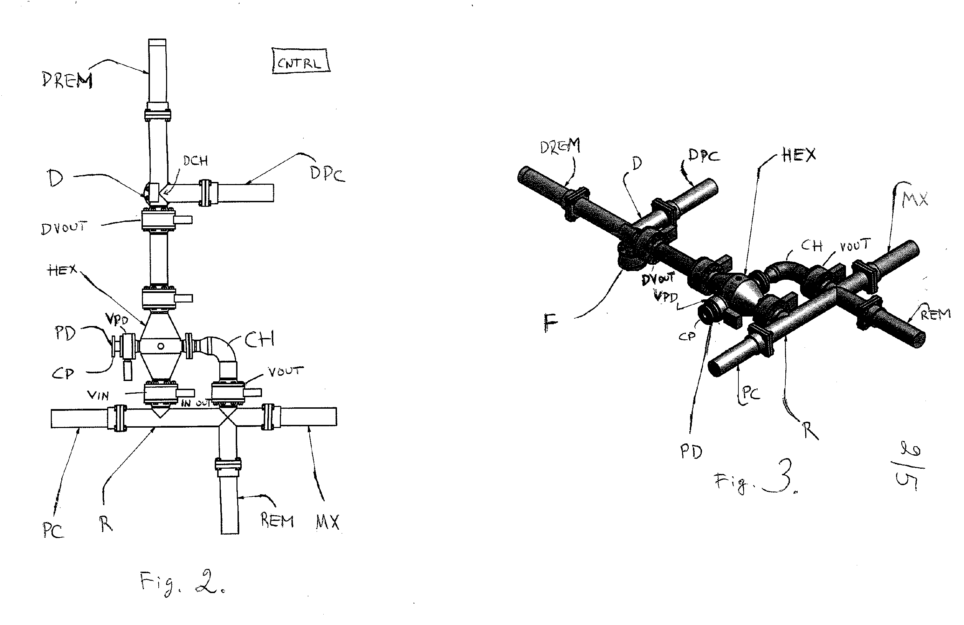

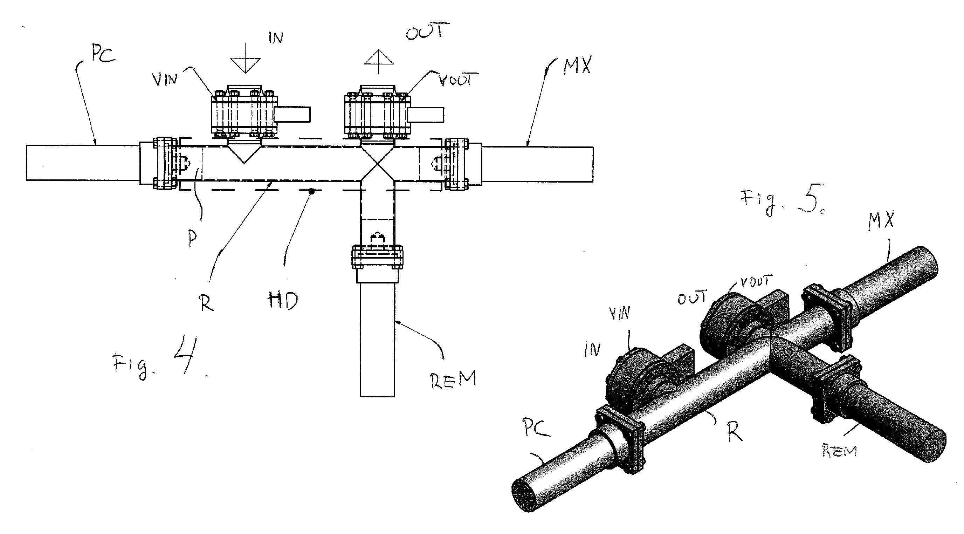

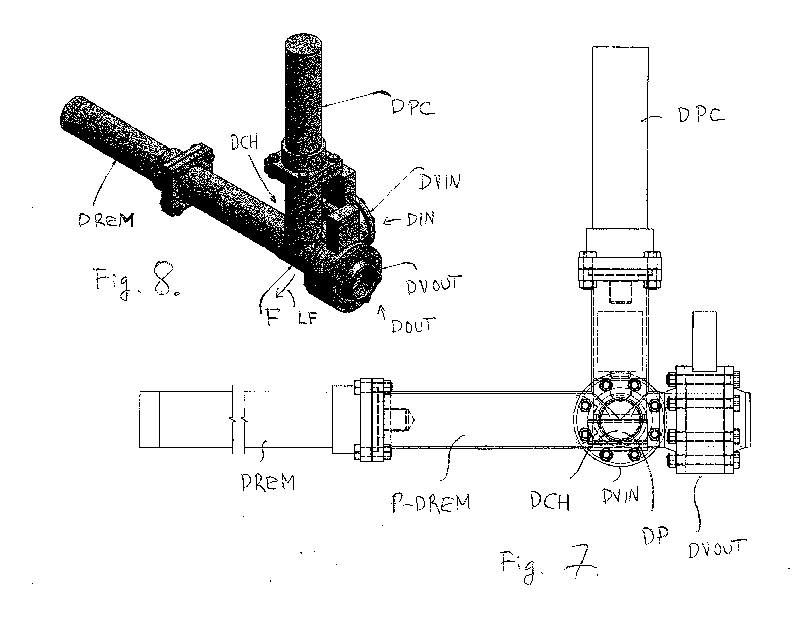

As to a fractionator D, reference is made to Figures 1a, 1b, 2 to 3, and 7 to 8. As to a hydrolysis reactor R, reference is made to Figures 2 to 6. Both, i.e. the fractionator D and the hydrolysis reactor R, are shown in Figures 2 to 3.

In an embodiment, prior to the pressure hydrolysis reactor R the equipment comprises a fractionator D to divide the slurry into liquid and residual slurry, which has a higher total solids content.

The fractionator D is connected to an inlet IN of the pressure hydrolysis reactor R in order to convey the residual slurry from the fractionator D to the pressure hydrolysis reactor R.

In the example of the figures, the fractionator D is not in direct immediate connection with the inlet of the pressure hydrolysis reactor R but, between the fractionator D and the pressure hydrolysis reactor R, a heat exchanger HEX is provided to serve as a preheater of the residual slurry. In order to preheat the residual slurry, i.e. slurry having an increased total solids content, prior to the pressure hydrolysis reactor R the heat exchanger HEX is arranged to receive residual slurry matter that has already been processed and that is to be removed from the pressure hydrolysis reactor R. A channel CH is provided between an outlet OUT of the pressure hydrolysis reactor R and the heat exchanger HEX in order to move the hydrolysis-processed mass to the heat exchanger HEX in order for the warm mass coming from the pressure hydrolysis reactor R to be able to release its heat to the mass entering the pressure hydrolysis reactor R, i.e. the residual slurry received from the fractionator D.

In an embodiment, prior to the fractionator D the equipment comprises a comminuting device CR for reducing the particle size of the slurry. The comminuting device is a mechanical crusher, for instance.

The fractionator D comprises a press/pressurization piston DP generating pressurization in a fractionating chamber DCH and arranged to press the slurry against a screen filter F comprised by the fractionator D in order to separate liquid from the slurry, and thus to produce residual slurry having a higher total solids content for the pressure hydrolysis reactor R. The inlet comprised by the fractionator D for the slurry is designated by DIN, and the outlet for residual slurry is designated by DOUT, which are controlled by valves DVIN and DVOUT, which are controlled by a control unit CNTRL.

The separation, i.e. fractionation, of manure or some such slurry into liquid and more solid matter is carried out by a fractionator D. In the fractionator D, the slurry is pressed by means of pressure. The pressurized liquid manure is pressed tightly against a filter F. In such a case, liquid matter is separated into a fraction of its own to be processed, while the drier component, i.e. residual slurry, is moved from the fractionator D to a hydrolysis reactor R, in an embodiment via a heat exchanger HEX.

In hydrolysis, in a hydrolysis reactor R, solid particles of organic mass, such as liquid manure, are processed by means of pressure and temperature, breaking down the cellular structure of the organic mass; in such a case, their biodegradability increases and viscosity decreases and, consequently, such preprocessed biomass is better suitable for practical use, such as generation of biogas for instance in anaerobic, i.e. substantially oxygen-free, digestion.

By means of fractionation of the above-disclosed kind and thermal pressure hydrolysis, for instance gas generation of biogas production can be made more efficient and an increase in the heat value of biogas can be made more efficient. As to the manner of transfer of organic matter, such as slurry, the invention enables the number of pumps to be reduced, which, in turn, reduces investment and service costs, and malfunction. The manner of transfer enables organic matter having a high total solids content to be transferred.

In fractionation, in a fractionator D organic matter is pressed against a filter F comprised by the fractionator D in order to separate liquid from the organic matter and in order to produce residual matter having a higher total solids content. A subsequent phase is one of moving, by a motion transverse to the pressing motion, the residual matter from a surface of the filter F towards the outlet DOUT of the fractionator D. Instead of a method, when viewed as equipment, the fractionator D comprises a pressurizing cylinder DPC which generates pressurization and is provided with a piston (piston DP) and arranged to press the organic matter against the filter (F) comprised by the fractionator in order to separate liquid from the organic matter and in order to produce residual matter having a higher total solids content. The equipment further comprises a transfer cylinder DREM provided with a piston (piston P-DREM) and transverse to the direction of travel of the piston DP of the press cylinder of the fractionator and arranged to move the residual matter from a surface of the filter F towards the outlet DOUT of the fractionator D.

The purpose of the fractionator D is to separate liquid from the slurry in order for the mass to be moved to the hydrolysis reactor R to have a sufficiently high total solids TS content, in an embodiment at least 35%.

The operation and structure of a fractionator D performing pre-hydrolysis fractionation are described in more detail as follows:

Slurry that has been mechanically comminuted by a crusher CR is moved by pumping to a fractionator D through a slurry supply valve DVIN. In this connection, a feed and transfer cylinder DREM and a press/pressurizing cylinder DPC of the fractionator retract into their extreme position and, by means of underpressure thus generated, enhance the filling up of the fractionator D with slurry. The piston of the press cylinder DPC is indicated by designation DP.

Next, the supply valve DVIN is closed.

The feed and transfer cylinder DREM is pushed next to the pressing/pressurizing cylinder DPC, partly pressurizing the slurry already. In such a case, some liquid is already released from the slurry through a liquid removal sieve or filter F.

The press cylinder DPC pushes the rest of the liquid being separated through the filter F as a flow LF, and thus a felt-like press-dried residue is formed inside the fractionator D from the solids. In Figures 1a, 1b, designation DP3 shows the piston in its lower position, whereto it has been moved towards the filter F. In an embodiment, the shape of the tip of the piston DP is hemispherical or has the shape of a cut-off of its calotte or vertex; this enables a uniform pressing to be achieved.

An outlet valve DVOUT is opened.

The feed and transfer cylinder DREM, serving as a transfer cylinder, pushes the dried residue, i.e. residual matter, through the outlet valve DVOUT to the heat exchanger HEX, returning to an inlet valve DVIN.

The outlet valve DVOUT is closed.

In such a case, the fractionator D has completed one operating cycle, starting its operation over again from the beginning.

The condensed residue, i.e. residual slurry, is moved via the heat exchanger HEX to the hydrolysis reactor R.

A liquid fraction separated from the slurry in the fractionator D is conveyed to a collector tank.

In terms of fractionation, a test conducted gave the following results. The initial situation was that the total solids TS content of incoming liquid manure was 8.8%. The total solids TS content of the separated solid matter, i.e. residual slurry, i.e. residual matter, was 35.5%, that of the separated liquid fraction being 2.9%, in turn. The separated liquid fraction was 85% of the total amount of the matter, while the separated solid matter accounted for the rest 15% of the amount. The figures given are average values.

In an embodiment, a return motion of the press cylinder DPC, i.e. the motion receding from the sieve F, is by means of underpressure being generated arranged to clean the sieve or filter F.

Three locking positions are provided for the piston DP of the press cylinder DPC, i.e. an upper position indicated by designation DP, an intermediate position in the middle, wherein the piston DP yields to the motion of the piston P-DREM of the feed and transfer cylinder DREM by means of which the piston of the feed and transfer cylinder DREM moves the residual matter forward, the third position being a lower position indicated by designation DP3 when the piston has pressed the liquid through the sieve F. As far as operation is concerned, the middle position is the last one.

Referring to Figures 2 to 6 in particular, thermal pressure hydrolysis is discussed. In connection with the pressure hydrolysis reactor R are provided means HD for heating the pressure hydrolysis reactor R. The pressure hydrolysis reactor has an inlet IN for slurry, and an outlet OUT for processed slurry, but since the matter in question is coming from the fractionator, the matter is residual slurry, i.e. as viewed more broadly, the matter is residual matter of organic matter.

For pressurizing the pressure hydrolysis reactor R, the pressure hydrolysis reactor R is provided with a movable piston P or another volume-change means P which is moved hydraulically by changing the inner hydraulic pressure of a pressurizing cylinder PC on the side of a rear surface of the piston P. Consequently, a variable-volume thermal pressure hydrolysis reactor R is achieved.

The piston P, i.e. the volume-change means P, of the hydrolysis reactor R moves from left to right when the pressure of the reactor R is to be increased, and back to the left when the pressure of the reactor is to be decreased.

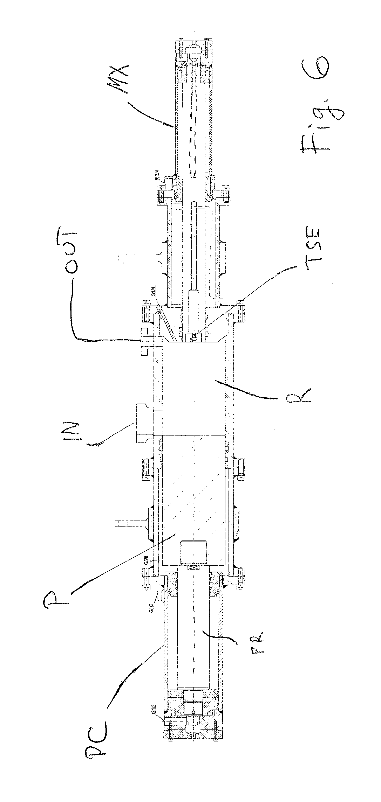

In Figure 6, a rod of the piston P is indicated by designation PR, and in Figure 6 the piston rod PR lies retracted into its left extreme position, the piston P thus also being in the left extreme position, i.e. the volume of the reactor R is then at its largest. It can be seen in Figure 6 that in an embodiment, the piston P of the reactor R is substantially a solid piece. It is further noticed that the piston P is extendable in a longitudinal direction of the reactor, i.e. in a direction of travel of the piston P, since in such a case the piston forms a long thermal protection which prevents seals of the pressurizing cylinder PC from being damaged by the heat of the interior, i.e. a slurry chamber, of the reactor R. In the example of the figure, the range of the piston P is greater than the length of travel of the piston P into the vacant interior of the reactor R; the length of travel of the piston P is for instance about half the length of the interior of the reactor R. In Figure 6, designation TSE refers to a temperature sensor for measuring temperature from the reactor R.

In a preferred embodiment, the equipment is based on batch production rather than on continuous production. The volume of the hydrolysis reactor R is very small, e.g. 10 dm³, i.e. 10 litres, which is an appropriate size category for a single farm. The reactor R is made of steel, and the piston R is a cast metal piece, for instance.

The means HD for heating the pressure hydrolysis reactor R comprise a heatable sheath of the pressure hydrolysis reactor R, i.e. the heating is indirect, heating the reactor R from outside the reactor chamber, rather than direct, in which case heating would be applied to the organic mass undergoing hydrolysis in the reactor R.

The hydrolysis reactor R is pressurized to a pressure of e.g. 160 bar by the volume-change piston P in the hydrolysis reactor R, and heated to a temperature of e.g. 160°C for 20 minutes, for instance.

According to the Applicant's discoveries, an appropriate pressure range is between 20 bar and 165 bar, the temperature being at least 140 degrees Celsius, for at least 15 minutes. The temperature is sufficiently high for the matter being processed to become hygienized.

It can be seen in the figures that the equipment comprises a removal means REM, such as a hydraulic cylinder, to move the processed mass through the outlet OUT out of the reactor R; the removal means REM, such as an exhaust cylinder, thus moves the mass to the channel CH towards the heat exchanger HEX.

In the hydrolysis reactor R, the solid particles of manure or another slurry soften and their cellular structure breaks down through pressure and temperature. Substantially opposite the volume-change means, such as the piston P, on the other edge of the pressure hydrolysis reactor R is provided a mixer MX for mixing the slurry contained in the pressure hydrolysis reactor. The mixer MX keeps the quality of the mass uniform, particularly in terms of temperature. Consequently, the time taken by the components of the slurry to biodegrade becomes shorter in anaerobic, i.e. oxygen-free, digestion.

In an embodiment, the equipment comprises a pressure disintegrator PD which is connected to the pressure hydrolysis reactor R and by means of which the slurry to be released from the pressure hydrolysis reactor R is with the pressure released from the pressure hydrolysis reactor R directed against a counterpart CP.

After hydrolysis, the exhaust cylinder REM is used for pressurizing the pipe system via the heat exchanger HEX to a quick-closing valve VPD of the pressure disintegrator PD, the rest of the solid particles being comminuted by the pressure disintegrator PD by means of pressure change and by impacting the slurry stream on the counterpart CP.

One operating cycle of a thermal pressure hydrolysis reactor is described in more detail as follows:

The solid matter of the slurry, i.e. residual slurry, received from the fractionator D and preheated by the heat exchanger HEX is conveyed through a supply valve V1 to the hydrolysis reactor R; in this connection, the pressurizing piston P, i.e. the volume-change means P, and the mixer MX of the reactor R retract simultaneously.

An inlet valve VIN of the reactor R is now made to close, an outlet valve V VOUT already being closed.

The hydrolysis reactor R is pressurized by the pressurizing piston P, i.e. the volume-change means P, of the pressurizing cylinder PC. In an embodiment, the heatable sheath of the reactor R heats the concentrated residual slurry to a temperature of 160°C for 20 minutes, the internal pressure of the reactor being 160 bar. The means HD used for heating may be for instance electric resistances or, in a double-walled sheath, hot oil.

Next, the valve VOUT at the outlet OUT is opened. The processed residual slurry is conveyed to the exhaust cylinder REM by means of the pressurizing cylinder PC and the mixer MX, such as a mixing cylinder MX. The removal means REM, such as the exhaust cylinder REM, moves the processed residual slurry to the channel CH towards the heat exchanger HEX.

Next, the valve VOUT at the outlet OUT is closed.

The cycle of the aforementioned type represents one operating cycle of the hydrolysis reactor R. Similar cycles are rerun.

After a cycle, before the next cycle, pressure disintegration is carried out. In the pressure disintegrator PD, the slurry mass is impacted with pressure on a fixed counterpart CP so that the organic matter processed in the hydrolysis reactor R is crushed into smaller pieces.

The valves VIN and VOUT, for instance, are ball valves controlled by the control unit CNTRL of the equipment. The valve control may be pneumatic or electrical.

Above, the subject was discussed with reference to slurry, but the invention and its embodiments are to be seen more broadly, i.e. as processing of organic matter, slurry thus being only one example of organic matter. Similarly, residual slurry is to be considered as an example only of residual matter.

It will be apparent to a person skilled in the art that as technology advances, the basic idea of the invention may be implemented in many different ways. The invention and its embodiments are thus not restricted to the examples described above but may vary within the scope of the claims.

## Claims

1. A method of preprocessing organic matter, the method comprising dividing by a fractionator (D) the organic matter into liquid and residual matter having a higher total solids content, **characterized by** pressing in the fractionator the organic matter against a filter (F) comprised by the fractionator in order to separate liquid from the organic matter and to produce residual matter having a higher total solids content, and subsequently moving by a motion transverse to the pressing motion the residual matter from a surface of the filter (F) towards an outlet (DOUT) of the fractionator (D).

2. A method as claimed in claim 1, **characterized by** generating by a return motion opposite to the pressing, i.e. a return motion receding from the filter (F), an underpressure for cleaning the filter (F).

3. A method as claimed in claim 1, **characterized by** performing the pressing motion by a piston (DP) of a pressurizing cylinder (DPC) of the fractionator (D), and by making the piston (DP) of the pressurizing cylinder (DPC) of the fractionator (D) recede from the filter by a motion in an opposite direction backwards into a yield position so as to yield to the travel of a piston (P-DREM) of a transfer cylinder (DREM) by means of which the piston (P-DREM) of the transfer cylinder (DREM) moves the residual matter towards the outlet (DOUT) of the fractionator.

4. A method as claimed in claim 1, **characterized by** after fractionation, breaking down by using thermal pressure hydrolysis a cellular structure of the organic matter, in which pressure hydrolysis a pressure hydrolysis reactor is pressurized by a piston (P) or another volume-change means of the pressure hydrolysis reactor (R) in order to subject the organic matter to a hydrolysis pressure effect, and the pressure hydrolysis reactor is heated in order to subject the organic matter to a hydrolysis heat effect.

5. A method as claimed in claim 4, **characterized by** preheating the residual matter between the fractionation and thermal pressure hydrolysis.

6. A method as claimed in claim 5, **characterized by** preheating the residual matter by means of already processed residual matter to be removed from the pressure hydrolysis reactor.

7. A method as claimed in claim 4, **characterized by** heating the residual matter contained in the pressure hydrolysis reactor indirectly by heating a sheath of the pressure hydrolysis reactor.

8. Equipment for preprocessing organic matter, comprising a fractionator (D) for dividing the organic matter into liquid and residual matter having a higher total solids content, the fractionator comprising an inlet (DIN) for the organic matter and an outlet (DOUT) for the residual matter having a higher total solids content, **characterized in that** that the fractionator (D) comprises a pressurizing cylinder (DPC) which produces pressurization and is provided with a piston (DP) and arranged to press the organic matter against a filter (F) comprised by the fractionator in order to separate liquid from the organic matter and to produce residual matter having a higher total solids content, the equipment further comprising a transfer cylinder (DREM) which is transverse to a direction of travel of the piston of the press cylinder and provided with a piston (P-DREM) and arranged to move the residual matter from a surface of the filter (F) towards the outlet (DOUT) of the fractionator (D).

9. Equipment as claimed in claim 8, **characterized in that** a return motion, i.e. a motion receding from the filter (F), of the piston (DP) of the pressurization cylinder (DPC) is by means of underpressure being generated arranged to clean the filter.

10. Equipment as claimed in claim 8 or 9, **characterized in that** the piston (DP) of the pressurization cylinder (DPC) of the fractionator (D) is arranged to recede from the filter backwards into a yield position so as to yield to the travel of the piston (P-DREM) of the transfer cylinder (DREM).

11. Equipment as claimed in claim 8, **characterized in that** the equipment comprises, after the fractionator, a pressure hydrolysis reactor (R) and in the pressure hydrolysis reactor an inlet (IN) for the residual matter and an outlet (OUT) for processed residual matter, and that the fractionator (D) is connected to the inlet (IN) of the pressure hydrolysis reactor in order to convey the residual matter from the fractionator (D) to the pressure hydrolysis reactor (R).

12. Equipment as claimed in claim 11, **characterized in that** a heat exchanger (HEX) serving as a preheater of the residual matter is provided between the fractionator (D) and the pressure hydrolysis reactor (R), and that in order to preheat the residual matter separated by the fractionator (D) prior to the pressure hydrolysis reactor (R), the heat exchanger (HEX) is arranged to receive already processed residual matter to be removed from the pressure hydrolysis reactor (R).

13. Equipment as claimed in claim 11, **characterized in that** the equipment comprises means (HD) for heating the pressure hydrolysis reactor, and that in order to pressurize the pressure hydrolysis reactor, the pressure hydrolysis reactor is provided with a movable piston (P) or another volume-change means (P).

14. Equipment as claimed in claim 11, **characterized in that** the means (HD) for heating the pressure hydrolysis reactor comprise a heatable sheath of the pressure hydrolysis reactor in order to achieve indirect heating for heating the residual matter.

15. Equipment as claimed in claim 11, **characterized in that** substantially opposite the volume-change means (P) on the other edge of the pressure hydrolysis reactor (R), a mixing means (MX) is provided for mixing the organic matter contained in the pressure hydrolysis reactor (R).
